# EUROPEAN PATENT APPLICATION

(11) **EP 4 397 207 A1**
(43) Date of publication of application: **10.07.2024**
(21) Application number: 22862595.0
(22) Date of filing: 22.03.2022
(51) Int. Cl.: A47B 96/20, A47B 97/00, B32B 3/28, B32B 27/00, B32B 27/06

(54) **COMPOSITE BOARD, FURNITURE AND MANUFACTURING METHOD**

(30) Priority: 01.09.2021 CN 202111023822
(71) Applicant: Leng, Luhao, Xiamen, Fujian 361005 (CN)
(72) Inventor: LENG, Luhao, Xiamen, Fujian 361005 (CN)
(74) Representative: Zacco Sweden AB
(86) International application number: PCT/CN2022/082317
(87) International publication number: WO 2023/029448

(57) **Abstract**

The present invention a composite panel, a furniture and a method of manufacturing the composite panel. The composite panel comprises a panel body and a frame. The panel body comprises at least two layers of panels attached to each other, a thickness of the panel body at the pair of parallel edges being less than that at an intermediate position of the panel body; the frame has grooves whose height corresponds to the thickness of the panel body at the pair of parallel edges. The pair of parallel edges of the panel body can be inserted into corresponding grooves of the frame, and can slide in the grooves in the extension direction of the parallel edges, thereby assembling the panel body and the frame together. The composite panel according to the present invention has advantages such as good stability, unlikelihood to bending and damages, and light weight and portability.

## Description

### FIELD

The present invention relates to relates to the field of furniture, and specifically to a composite panel, furniture and a method of manufacture the composite panel.

### BACKGROUND

With the increasing material and cultural needs of people's lives, requirements for household products are also increasing. Consumers are increasingly inclined to choose household products that have strong functions, high stability and a good appearance. For example, if the thickness of panels in the conventional furniture is large, the panels will have a better stability and visual effect, but the weight of the panels increases. If the thickness is small and the weight is light, the defect that the panels are liable to break or damages will be caused.

Accordingly, it is desirable to provide a composite panel, furniture and a method of manufacture the composite panel, to at least partially address the above problems.

### SUMMARY

A main object of the present invention is to provide a composite panel, furniture and a method of manufacturing the composite panel. The composite panel according to the present invention has a preferred thickness as well as a smaller weight as compared to conventional panels with equal thickness. Thus, the composite panel according to the present invention has advantages such as good stability, unlikelihood to bending and damages, and light weight and portability.

According to an aspect of the present invention, there is provided a composite panel comprising:
a panel body comprising at least two layers of panels attached to each other and having a pair of opposed parallel edges, wherein a thickness of the panel body at the pair of parallel edges is less than that at an intermediate position of the panel body;
a frame surrounding the panel body and being capable of engaging a corresponding edge of the panel body, wherein a portion of the frame corresponding to the pair of parallel edges of the panel body is formed with a groove opening toward the panel body and extending in an extension direction of the parallel edges,
wherein a size of the opening of the groove corresponds to the thickness of the panel body at the pair of parallel edges, so that the pair of parallel edges of the panel body can be inserted into corresponding grooves of the frame, and can slide in the grooves in the extension direction of the parallel edges, thereby assembling the panel body and the frame together.

In one embodiment, the at least two layers of panels comprise a top panel and a bottom panel attached to each other, the top panel and/or the bottom panel having a different structure at the pair of parallel edges of the panel body than at other portions of the panel body other than the parallel edges.

In one embodiment, the top panel and the bottom panel are configured in a way that:
a top wall of the top panel and a bottom wall of the bottom panel are spaced apart from each other at positions of the panel body other than the pair of parallel edges;
at the pair of parallel edges of the panel body, the top panel and the bottom panel are closely adhered to each other to form a laminated structure.

In one embodiment, bottom surfaces of the pair of parallel edges of the panel body and a bottom wall of the bottom panel are in the same plane; or
top surfaces of the pair of parallel edges of the panel body and the top wall of the top panel are in the same plane.

In one embodiment, the bottom panel is a corrugated panel comprising a flat plate-shaped body portion and protrusions protruding upward from the body portion and opening downward; and
the top panel comprises a top wall main body having a flat shape and a top wall extension portion extending from the top wall main body obliquely downward toward the groove, an end of the top wall extension portion being formed as an elongated tongue portion,
wherein, at the parallel edges of the panel body, the body portion of the bottom panel and the tongue fit closely together to fit in the groove.

In one embodiment, the protrusions are formed in a frusto-conical shape whose top surface is closely attached to a bottom surface of the top wall main body.

In one embodiment, the frame comprises a hollow frame body and a bend located at a top of the frame body and defining a groove, the frame body, as a whole, projecting downwardly beyond the panel body.

In one embodiment, the frame body defines a hollow portion having a rectangular cross-section by its top wall, bottom wall, outer side wall and inner side wall, the top wall and the outer side wall are attached together at an intersection position thereof and bent toward the panel body to form the bend above the frame body, and ends of the bends of the top wall and the outer side wall are integrally formed.

In one embodiment, the at least two layers of panels are formed by blow molding.

According to a second aspect of the present invention, there is provided a furniture comprising the composite panel according to any of the preceding solutions.

In one embodiment, the furniture is a table comprising a table panel and legs, the table panel comprising the composite panel.

In one embodiment, the table panel comprises at least two table panel units that are foldable relative to each other, the table panel units being constructed from the composite panel.

In one embodiment, the legs are configured to be folded to abut against and parallel to bottom surfaces of the table panel units and folded together with table panel unit relative to the other table panel unit.

According to a third aspect of the invention, there is provided a method of manufacturing the composite panel according to any of the preceding solutions, the method comprising:
providing at least two layers of panels and attaching the at least two layers of panels to each other to form a panel body having a pair of opposed parallel edges, a thickness of the panel body at the pair of parallel edges being less than that at an intermediate position of the panel body;
providing a frame capable of surrounding the panel body and engaging with each edge of the panel body, wherein a groove opening towards the panel body and extending along an extension direction of the parallel edges is provided at a position of the frame corresponding to the pair of parallel edges of the panel body, and a size of the opening of the groove is consistent with the thickness of the panel body at the pair of parallel edges;
inserting the pair of parallel edges of the panel body into corresponding grooves of the frame, and sliding the panel body relative to the frame in the extension direction of the parallel edges until the panel body and the frame are assembled together.

In one embodiment, the step of providing the frame comprises a step of providing a plurality of beams and a step of connecting the plurality of beams into the frame, wherein the step of providing the beams comprises:
providing a rectangular blank plate having a pair of first edges extending in a length direction and a pair of second edges extending in a width direction;
connecting the pair of first edges together to allow the blank plate to form a tubular structure;
shaping the tubular structure such that the tubular structure comprises a hollow beam body portion and a beam extension portion extending upwardly from the body portion, wherein the beam extension portion is jointly formed by two walls that abut against each other and are joined at an end away from the beam body portion;
bending the beam extension portion relative to the beam body portion to define the groove open to one side between the beam extension portion and the beam body portion.

### BRIEF DESCRIPTION OF THE DRAWINGS

Reference may be made to preferred embodiments shown in the figures to enable better understanding of the above and other objects, features, advantages and functions of the present invention. The same reference numerals in the figures denote the same parts. Those skilled in the art should appreciate that the figures are intended to schematically illustrate the preferred embodiments of the present invention, and not intended to impose any limitations to the scope of the present invention. All parts in the figures are not drawn to scale.
FIG. 1 through FIG. 3 illustrate an assembling process of a composite panel according to a preferred embodiment of the present invention;
FIG. 4 is a cross-sectional view taken along line A-A in FIG. 3;
FIG. 5 is a partially enlarged view of a portion B of FIG. 4;
FIG. 6 is a partially enlarged view of a portion C in FIG. 4;
FIG. 7 is a bottom perspective view of a table according to a preferred embodiment of the present invention.
FIG. 8 and FIG. 9 are, in turn, schematic illustrations of a process of folding the table of FIG. 7.

### REFERENCE NUMERALS:

100 Panel body
101 Longitudinal edge of the panel body
200 Frame
201 Edge longitudinal beam
202 Transverse beam
203 Intermediate longitudinal beam
204 Receiving opening
205 Pivot portion
110 Top panel
101 Extension flat plate
120 Bottom panel
121 Bottom wall of the bottom panel
122 Top wall of the bottom panel
123 Connecting wall of the bottom panel
201a frame body
201b groove
2011 Inner side wall of the frame body
2012 Bottom wall of the frame body
2013 Outer side wall of the frame body
2014 Top wall of the frame body
300 Composite panel
340 Table
400 Leg

### DETAILED DESCRIPTION OF EMBODIMENTS

Specific embodiments of the present disclosure will now be described in detail with reference to the figures. What are described herein are only preferred embodiments of the present invention. Those skilled in the art may implement other manners of the present disclosure on the basis of the preferred embodiments, and said other manners also fall within the scope of the present disclosure.

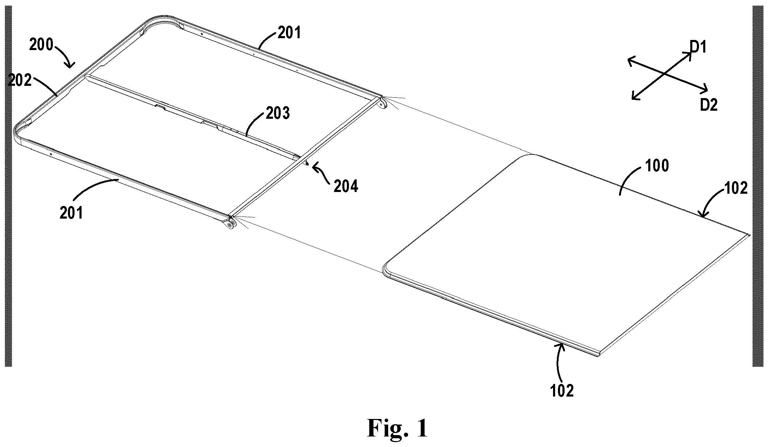

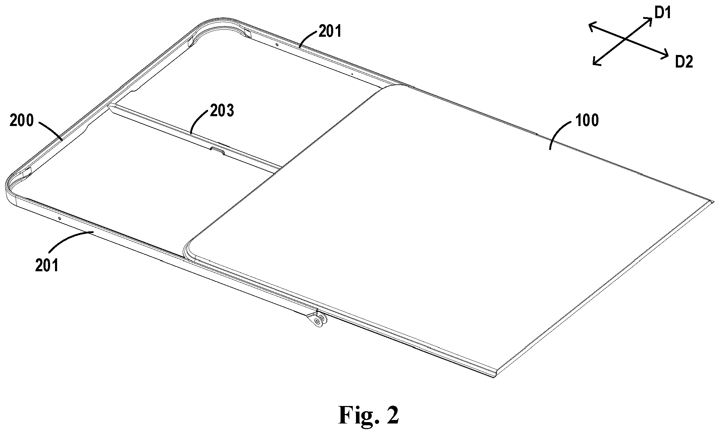

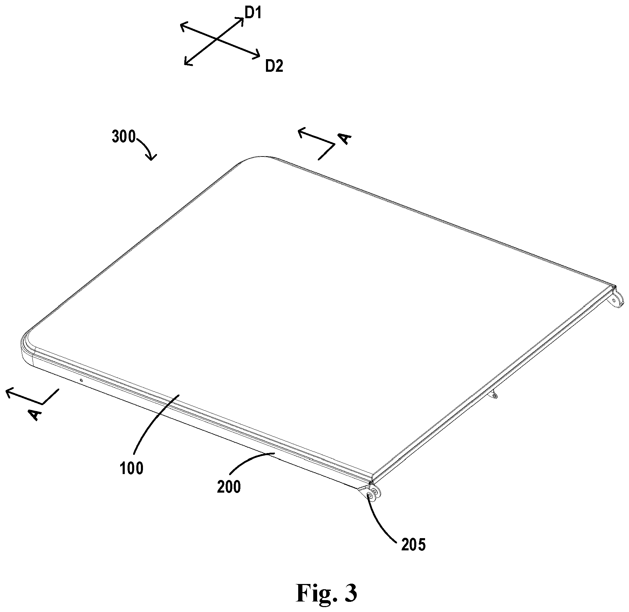

The present invention provides a composite panel, furniture comprising the composite panel and a method of manufacture the composite panel. FIG. 1 through FIG. 9 show some preferred embodiments according to the invention.

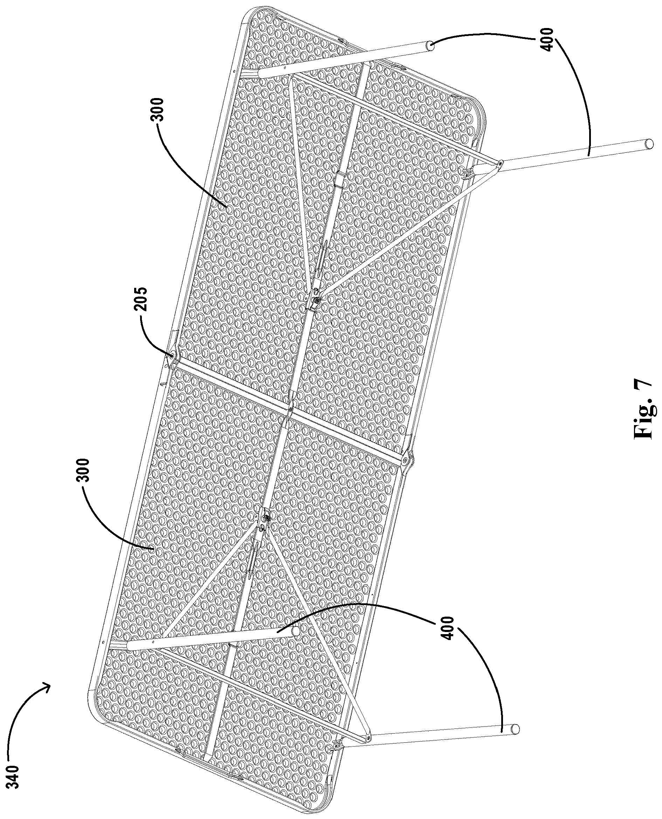

FIG. 1 through FIG. 6 show a composite panel 300 according to the present invention. The composite panel 300 for example may be used as a table panel of a table 340 shown in FIG. 7 through FIG. 9. Alternatively, the composite panel 300 shown in FIG. 1 through FIG. 6 may also be used as a box panel, a bed panel, or other furniture parts.

First, it should be appreciated that directional terms and positional terms mentioned in the present invention may be understood with reference to the embodiments shown in FIG. 1 through FIG. 9. The directional terms and positional terms mentioned in the present invention are relative directions and positions rather than absolute directions and positions of various parts. For example, a "transverse direction" mentioned in the embodiments is the D1 direction shown in the figures, a "longitudinal direction" is the D2 direction shown in the figures, and a thickness direction is a direction perpendicular to both the transverse direction D1 and the longitudinal direction D2.

Reference is first made to FIG. 1 through FIG. 3. A composite panel 300 according to a preferred embodiment of the present invention comprises a panel body 100 and a frame 200. The panel body 100 is a generally rectangular plate-like structure having a pair of longitudinal edges 102 and a pair of transverse edges. The frame 200 surrounds the panel body 100 and can engage edges of the panel body 100. The frame 200 is a rectangular frame structure and comprises a pair of edge longitudinal beams 201, a front transverse beam 202 and an intermediate longitudinal beam 203. The pair of longitudinal edges 102 of the panel body 100 can engage the frame 200 such that the panel body 100 can be made move from a receiving opening 204 of the frame 200 into engagement with the frame 200 and continue to slide relative to the frame 200 in the longitudinal direction D2 to a position where the panel body 100 fully engages the frame 200.

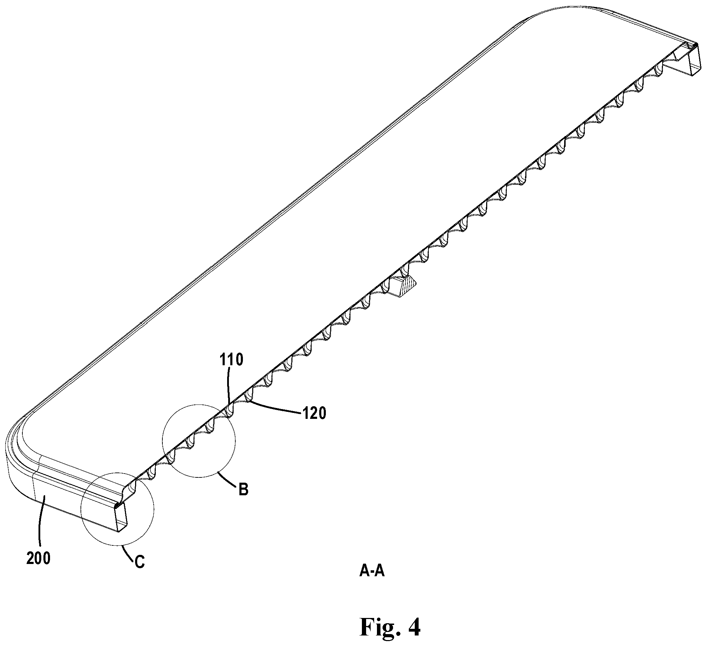

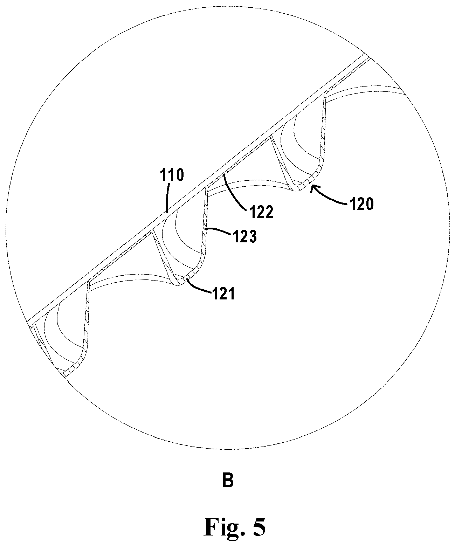

The detailed arrangement of the panel body 100 and the frame 200 is shown in FIG. 4 through FIG. 6. Referring first to FIG. 4 and FIG. 5, the panel body 100 comprises two layers of panels attached to each other, and may comprise three or more layers of panels in other embodiments. It should be appreciated that "a top panel" and "a bottom panel" mentioned in the present invention are only of a pair of panels attached to each other. For example, in an embodiment comprising four layers of panels, if the second and third layers of panels counted from top to bottom are studied, the second layer of panel may be referred to as the top panel and the third layer of panel may be referred to as the bottom panel. That is, there may still be other panels on a top side of the top panel and other panels below a bottom side of the bottom panel.

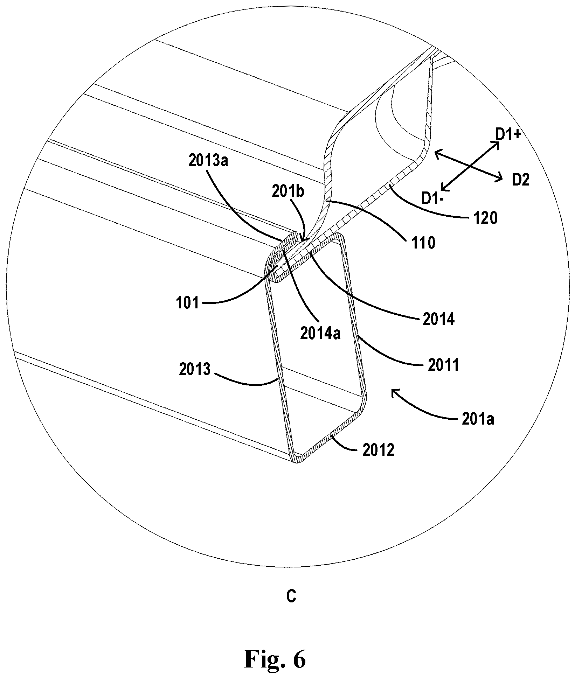

Further referring to FIG. 6, the thickness of the panel body 100 at the pair of longitudinal edges (i.e., the thickness at the ends in the direction D1 in FIG. 6) is less than that at a middle position of the panel body 100. A groove 201b opening towards the panel body 100 and extending along an extension direction of the parallel edges is provided at a position of the frame 200 corresponding to the pair of longitudinal edges 102 of the panel body 100, and the groove 201b has a height corresponding to the thickness of the panel body 100 at the pair of longitudinal edges 102. In other words, the groove 201b is formed on the pair of edge longitudinal beams 201 of the frame 200. The pair of longitudinal edges 102 of the panel body 100 may be inserted into the corresponding grooves 201b of the frame 200, and the panel body 100 is enabled to slide relative to the frame 200 in the longitudinal direction D2 so that the panel body 100 is assembled together with the frame 200. Although in the present embodiment, the pair of parallel edges of the panel body 100 cooperating with the frame 200 are longitudinal edges thereof, in other embodiments not shown, the "pair of parallel edges" may be transverse edges or a pair of parallel edges in an irregular shape.

Some preferred embodiments of the panel body 100 and the frame 200 are given in the present embodiment.

With respect to the arrangement of the panel body 100, for example, referring to FIG. 4 and FIG. 5, at least two layers of panels comprise a top panel 110 and a bottom panel 120 that contact each other.

Further referring to FIG. 5 and FIG. 6, in the present embodiment, the bottom panel 120 is a corrugated panel including a bottom panel 120 body having a flat plate shape and protrusions opened at a lower end recessed upward from the bottom panel 120 body. The protrusions are formed in a truncated cone shape and each have a top surface closely fitted with a bottom surface of the top panel 110. That is, as for the bottom panel 120 itself, the top wall 122 is opened downward and the bottom wall 121 is opened upward, and the top wall 122 is adapted to be attached to the top panel 110, and a connecting wall 123 is provided between the top wall 122 and the bottom wall 121. For the truncated cones corresponding to the protrusions, the connecting walls 123 constitute side faces of each truncated cone, the top wall 122 of the bottom panel 120 constitutes a top face of each truncated cone, and the bottom of each truncated cone is open. The bottom wall 121 of the bottom panel 120 constitutes a main body of the bottom panel 120.

Unlike the bottom panel 120, the top panel 110 comprises a top wall main body formed in a flat plate structure and a top wall extension portion extending downward from the top wall main body and toward the groove 201b, and an end of the top wall extension portion in the D1 direction is formed as an extension flat plate 101. Referring to FIG. 6, at the longitudinal edges 102 of the panel body 100, the main body of the bottom panel 120 and the extension flat plate 101 fit closely together to fit in the groove 201b.

As may be seen, in the present embodiment, there is a gap between the top wall of the top panel 110 and the bottom wall of the bottom panel 120 at an intermediate position of the panel body 100 except for the pair of longitudinal edges 102 (see FIG. 5). At the pair of longitudinal edges 102 of the panel body 100 (referring to FIG. 6), the top panel 110 and the bottom panel 120 are a flat plate structure with two layers closely adhered to each other, the end 101 of the top panel 110 and the end of the bottom panel 120 are two flat plates closely adhered to each other, and portions at the pair of longitudinal edges 102 of the panel body 100 and the bottom wall of the bottom panel 120 are in the same plane. Also preferably, in other embodiments not shown, the portions of the panel body 100 at the pair of longitudinal edges 102 and the top wall of the top panel 110 are in the same plane.

As may be seen, in the present embodiment, the top panel 110 and the bottom panel 120 are each structured differently at the pair of longitudinal edges 102 of the panel body 100 than at an intermediate portion of the panel body 100 other than the longitudinal edges 102. However, in other embodiments not shown, the top panel may be a simple flat panel, i.e., it has the same structure at the longitudinal edges of the panel body as at other positions, while the bottom panel has a different structure at the pair of longitudinal edges of the panel body than at an intermediate portion of the panel body other than the longitudinal edges. Alternatively, the bottom panel may be a simple flat panel, i.e., it has the same structure at the longitudinal edges of the panel body as at other positions, while the top panel has a different structure at the pair of longitudinal edges of the panel body than at an intermediate portion of the panel body other than the longitudinal edges. As appreciated, it is feasible as long as the thickness of the panel body formed from at least two layers of panels at the pair of longitudinal edges is ensured less than that at the intermediate position of the panel body.

Reference is mainly made to FIG. 6 for a preferred arrangement of the frame 200. The frame 200 comprises a hollow frame body 201a and a groove 201b portion defining a groove 201b at the top of the frame body 201a. The frame body 201a defines a hollow portion having a rectangular cross-section by its top wall 2014, bottom wall 2012, outer side wall 2013 and inner side wall 2011. The top wall 2014 extends to form a section of extension wall 2014a at an intersection position thereof with the outer side wall 2013, the outer side wall 2013 extends to form a section of extension wall 2013a at an intersection position thereof with the top wall 2014, the extension wall 2014a of the top wall 2014 and the extension wall 2013a of the outer side wall 2013 are fitted together and extend from the intersection position toward the panel body 100 to form the groove 201b portion above the frame body 201a, and the extension wall 2014a of the top wall 2014 and the extension wall 2013a of the outer side wall 2013 are connected together at an end remote from the intersection position. When the frame 200 is manufactured, the top wall 2014 and the outer side wall 2013 of the frame body 201a may be gathered together at the intersection position thereof and form such extension wall structures abutting each other. In the present embodiment, the frame body 201a protrudes downward beyond the panel body 100, and the bottom side of the frame body 201a (i.e., the bottom side of the bottom wall 2012 thereof) is lower than the bottom side of the panel.

Preferably, the frame 200 may also be provided with a pivot portion 205 for mounting a pivot extending in the transverse direction Dl.

Preferably, at least two layers of panels of the panel body 100 are all formed by blow molding. A method of blow molding each layer of panel comprises the following steps: placing a frame on top of a mold having a shape matching the shape of the frame, wherein a protruding portion is formed on an outer edge of the frame, the protruding portion protruding outwards in an extension direction of the formed panel and protruding outwards from the mold; placing a plastic blank plate onto a top surface of a mold mounted with the frame, and applying a suction force in a direction perpendicular to the extension direction of the panel, so as to form the plastic blank plate using a suction molding process, so that the plastic blank plate covers the frame and the mold; moving the mold in a direction perpendicular to the extension direction of the panel to disengage from the frame and the plastic blank plate; trimming the plastic blank plate to ensure that the trimmed plastic blank plate covers at least an outwardly-facing surface of the protruding portion of the frame to ensure that the frame is embedded within the trimmed plastic blank plate.

Preferably, a bottom edge of the mold is provided with a step around a main body of the mold, and the frame is configured to be adaptively placed on the step around the main body of the mold.

FIG. 7 through FIG. 9 illustrate a table 340 that comprises the composite panel 300 shown in FIG. 1 through FIG. 6. The table 340 is a foldable table 340 comprising a table panel and legs 400, wherein the table panel comprises table panel units that can be pivoted and folded relative to each other about an axis X, and each of the table panel unit is made of one composite panel 300. The legs 400 are configured to be folded to abut against and parallel to a bottom surface of the table panel unit and folded with the table panel unit relative to the other table panel unit.

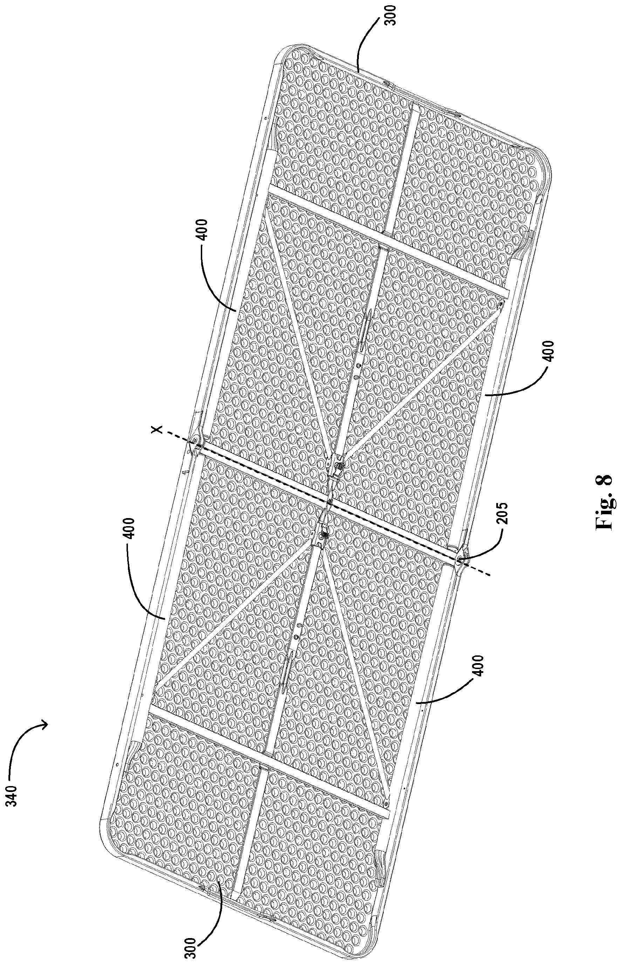

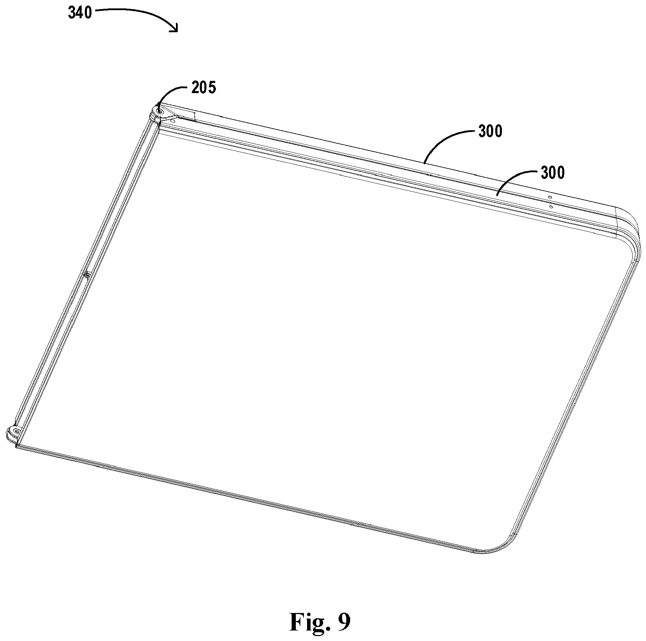

When the table 340 needs to be folded and stored, the four legs 400 may be first folded to a state where they abut against and parallel to the bottom surface of the table panel unit and can be folded together with the table panel unit with respect to the other table panel unit, as shown in FIG. 8; thereafter, the two table panel units are folded and pivoted relative to each other about the pivot portion 205 to a state shown in FIG. 9.

Preferred embodiments of the present invention also provide a method of manufacturing the composite panel according to FIGS. 1-6. The method comprises: providing at least two layers of panels and attaching the at least two layers of panels to each other to form a panel body having a pair of opposed longitudinal edges, the thickness of the panel body at the pair of longitudinal edges being less than that at an intermediate position of the panel body; providing a frame capable of surrounding the panel body and engaging with each edge of the panel body, wherein a groove opening towards the panel body and extending along an extension direction of the longitudinal edges is provided at a position of the frame corresponding to the pair of longitudinal edges of the panel body, and the height of the groove is consistent with the thickness of the panel body at the pair of longitudinal edges; inserting the pair of longitudinal edges of the panel body into corresponding grooves of the frame, and sliding the panel body relative to the frame in an extension direction of the longitudinal edges until the panel body and the frame are assembled together.

With reference to FIG. 6, the step of providing the frame comprises a step of providing a plurality of beams and a step of connecting the plurality of beams into the frame, wherein the step of providing the beams comprises: providing a rectangular blank plate having a pair of first edges extending in a length direction and a pair of second edges extending in a width direction; connecting the pair of first edges together to allow the blank plate to form a tubular structure; shaping the tubular structure such that the tubular structure comprises a hollow beam body portion and a beam extension portion extending upwardly from the body portion, wherein the beam extension portion is jointly formed by two walls that abut against each other and are joined at an end away from the beam body portion; bending the beam extension portion relative to the beam body portion to define the groove open to one side between the beam extension portion and the beam body portion.

The composite panel according to the present invention has a preferred thickness as well as a smaller weight as compared to conventional panels with equal thickness. Thus, the composite panel according to the present invention has advantages such as good stability, unlikelihood to bending and damages, and light weight and portability.

The above depictions of various embodiments of the present invention are provided to those having ordinary skill in the art for depiction purpose, and are not intended to exclude other embodiments from the present disclosure or limit the present disclosure to a single disclosed embodiment. As described above, various alternatives and modifications of the present disclosure will be apparent to those of ordinary skill in the art. Accordingly, although some alternative embodiments have been described in detail, those having ordinary skill in the art will understand or readily develop other embodiments. The disclosure is intended to cover all alternatives, modifications and variations of the present disclosure described herein, as well as other embodiments falling within the spirit and scope of the present disclosure described herein.

## Claims

1. A composite panel (300) comprising:
a panel body (100) comprising at least two layers of panels attached to each other and having a pair of opposed parallel edges (102), wherein a thickness of the panel body at the pair of parallel edges is less than that at an intermediate position of the panel body;
a frame (200) surrounding the panel body and being capable of engaging a corresponding edge of the panel body, wherein a portion of the frame corresponding to the pair of parallel edges of the panel body is formed with a groove (201b) opening toward the panel body and extending in an extension direction of the parallel edges,
wherein a size of the opening of the groove corresponds to the thickness of the panel body at the pair of parallel edges, so that the pair of parallel edges of the panel body can be inserted into corresponding grooves of the frame, and can slide in the grooves in the extension direction of the parallel edges, thereby assembling the panel body and the frame together.

2. The composite panel according to claim 1, wherein the at least two layers of panels comprise a top panel (110) and a bottom panel (120) attached to each other, the top panel and/or the bottom panel having a different structure at the pair of parallel edges of the panel body than at other portions of the panel body other than the parallel edges.

3. The composite panel according to claim 2, wherein the top panel and the bottom panel are configured in a way that:
a top wall of the top panel and a bottom wall of the bottom panel are spaced apart from each other at positions of the panel body other than the pair of parallel edges;
at the pair of parallel edges of the panel body, the top panel and the bottom panel are closely adhered to each other to form a laminated structure.

4. The composite panel according to claim 2, wherein bottom surfaces of the pair of parallel edges of the panel body and a bottom wall of the bottom panel are in the same plane; or
top surfaces of the pair of parallel edges of the panel body and the top wall of the top panel are in the same plane.

5. The composite panel according to claim 3, wherein the bottom panel is a corrugated panel comprising a flat plate-shaped body portion and protrusions protruding upward from the body portion and opening downward; and
the top panel comprises a top wall main body having a flat shape and a top wall extension portion (101) extending from the top wall main body obliquely downward toward the groove, an end of the top wall extension portion being formed as an elongated tongue portion,
wherein, at the parallel edges of the panel body, the body portion of the bottom panel and the tongue fit closely together to fit in the groove.

6. The composite panel according to claim 5, wherein the protrusions are formed in a frusto-conical shape whose top surface is closely attached to a bottom surface of the top wall main body.

7. The composite panel according to claim 1, wherein the frame comprises a hollow frame body (201a) and a bend located at a top of the frame body and defining a groove, the frame body, as a whole, projecting downwardly beyond the panel body.

8. The composite panel according to claim 7, wherein the frame body defines a hollow portion having a rectangular cross-section by its top wall (2014), bottom wall (2012), outer side wall (2013) and inner side wall (2011), the top wall and the outer side wall are attached together at an intersection position thereof and bent toward the panel body to form the bend above the frame body, and ends of the bends of the top wall and the outer side wall are integrally formed.

9. The composite panel according to claim 1, wherein the at least two layers of panels are formed by blow molding.

10. A furniture, wherein the furniture comprises the composite panel according to any of claims 1-9.

11. The furniture according to claim 10, wherein the furniture is a table (340) comprising a table panel and legs (400), the table panel comprising the composite panel.

12. The furniture according to claim 11, wherein the table panel comprises at least two table panel units that are foldable relative to each other, the table panel units being constructed from the composite panel.

13. The furniture according to claim 11, wherein the legs are configured to be folded to abut against and parallel to bottom surfaces of the table panel units and folded together with table panel unit relative to the other table panel unit.

14. A method of manufacturing the composite panel according to any of claims 1-9, wherein the method comprises:
providing at least two layers of panels and attaching the at least two layers of panels to each other to form a panel body having a pair of opposed parallel edges, a thickness of the panel body at the pair of parallel edges being less than that at an intermediate position of the panel body;
providing a frame capable of surrounding the panel body and engaging with each edge of the panel body, wherein a groove opening towards the panel body and extending along an extension direction of the parallel edges is provided at a position of the frame corresponding to the pair of parallel edges of the panel body, and a size of the opening of the groove is consistent with the thickness of the panel body at the pair of parallel edges;
inserting the pair of parallel edges of the panel body into corresponding grooves of the frame, and sliding the panel body relative to the frame in the extension direction of the parallel edges until the panel body and the frame are assembled together.

15. The method according to claim 14, wherein the step of providing the frame comprises a step of providing a plurality of beams and a step of connecting the plurality of beams into the frame, wherein the step of providing the beams comprises:
providing a rectangular blank plate having a pair of first edges extending in a length direction and a pair of second edges extending in a width direction;
connecting the pair of first edges together to allow the blank plate to form a tubular structure;
shaping the tubular structure such that the tubular structure comprises a hollow beam body portion and a beam extension portion extending upwardly from the body portion, wherein the beam extension portion is jointly formed by two walls that abut against each other and are joined at an end away from the beam body portion;
bending the beam extension portion relative to the beam body portion to define the groove open to one side between the beam extension portion and the beam body portion.
